# EUROPÄISCHE PATENTSCHRIFT

(11) **EP 2 250 389 B1**
(45) Veröffentlichungstag und Bekanntmachung des Hinweises auf die Patenterteilung: **09.04.2014**
(21) Anmeldenummer: 09709210.0
(22) Anmeldetag: 05.02.2009
(51) Int. Cl.: F16D 65/14, F16D 55/226

(54) **SCHEIBENBREMSE, INSBESONDERE FÜR EIN NUTZFAHRZEUG**
DISK BRAKE, ESPECIALLY FOR A UTILITY VEHICLE
FREIN À DISQUE, EN PARTICULIER POUR UN VÉHICULE UTILITAIRE

(30) Priorität: 07.02.2008 DE 102008008308
(43) Veröffentlichungstag der Anmeldung: 17.11.2010
(73) Patentinhaber: Knorr-Bremse Systeme für Nutzfahrzeuge GmbH, 80809 München (DE)
(72) Erfinder: GEISSLER, Steffen, 63512 Hainburg (DE); BAUMGARTNER, Johann, 85368 Moosburg (DE); TRIMPE, Robert, 82234 Wessling (DE)
(74) Vertreter: Mattusch, Gundula
(86) Internationale Anmeldenummer: PCT/EP2009/000804
(87) Internationale Veröffentlichungsnummer: WO 2009/098060

(56) Entgegenhaltungen:
- EP-A- 0 402 835
- WO-A-2004/102023
- DE-C2- 19 515 063

## Beschreibung

Die Erfindung betrifft eine Scheibenbremse nach dem Oberbegriff des Anspruchs 1.

Der prinzipielle Aufbau einer solchen Scheibenbremse ist beispielsweise aus der DE 195 15 063 C2 bekannt.

Dabei weist die Zuspanneinrichtung zwei Stellspindeln auf, die im Bremssattel verschieblich gelagert sind und die an ihrem der Bremsscheibe zugewandten Ende jeweils ein Druckstück tragen, mit denen im Funktionsfall der Bremsbelag gegen die Bremsscheibe gedrückt wird.

Die Druckstücke sind so gestaltet, dass sie die zu übertragende, von der Zuspanneinrichtung aufgebrachte Kraft von einer klein bemessenen Krafteinleitungsfläche, die durch die einander zugewandten und insoweit Druckflächen darstellenden Stirnseiten der Stellspindel und des jeweiligen Druckstücks gebildet werden, auf eine relativ große Fläche an der Anlage des Druckstücks am Bremsbelag verteilen.

Ziel dieser Gestaltung ist es, die Biegebeanspruchung des Bremsbelages, vornehmlich einer Belagträgerplatte und damit deren Verformung gering zu halten, um eine möglichst gleichmäßige Kraftverteilung in einen mit der Belagträgerplatte verbundenen und bei einer Bremsung die Bremsscheibe kontaktierenden Reibbelag zu erreichen.

Bei Betätigung der Bremse erfolgt durch den großflächigen Kontakt der Druckstücke an der Belagträgerplatte eine Übertragung der entstehenden Reibungswärme in das Innere des Bremssattels, wodurch die darin angeordneten Bauteile einer sehr starken thermischen Belastung ausgesetzt werden.

Besonders stark werden mit den Druckstücken verbundene Faltenbälge belastet, die im Bereich der Druckstücke angeordnet sind und mit denen das Innere des Bremssattels im Austrittsbereich der Stellspindel verschlossen ist. Eine besondere Beschädigungsgefahr besteht für die Bauteile, die aus Kunststoff- und/oder Elastomeren hergestellt sind sowie für Schmierfett, das ebenfalls im Bremssattel vorgesehen ist.

Insbesondere bei extremer Beanspruchung der Bremse kann eine Temperatur von 500°C am Bremsbelag entstehen und in der Folge an den Kontaktstellen der Faltenbälge mit den Druckstücken 300°C und mehr.

Zur Reduzierung der Wärmeübertragung wurde bereits vorgeschlagen (EP 0 402 835 A), Isolierscheiben einzusetzen. Diese erwiesen sich jedoch als nicht geeignet für einen Dauerbetrieb, da sie bei Betätigung der Bremse mit einer hohen Zuspannkraft Relativbewegungen gegen die Druckstücke ausführen, was zu einem nicht akzeptablen Verschleiß führt.

Darüber hinaus erfordert die Befestigung dieser Isolierscheiben an den Druckstücken zusätzliche Bauteile und einen entsprechend hohen Montageaufwand mit den sich daraus ergebenden zusätzlichen Kosten.

WO 2004/102023 offenbart den Oberbegriff des Anspruchs 1.

Insoweit stellt die bekannte Scheibenbremse eine in Bezug auf die Standzeit sowie die Herstellungskosten eher unbefriedigende Lösung dar.

Der Erfindung liegt die Aufgabe zugrunde, eine Scheibenbremse der gattungsgemäßen Art so weiterzuentwickeln, dass mit geringem konstruktiven und fertigungstechnischen Aufwand die Standzeit erhöht und die Betriebssicherheit verbessert wird.

Diese Aufgabe wird durch eine Scheibenbremse mit den Merkmalen des Anspruchs 1 gelöst.

Eine in diesem Sinne ausgebildete Scheibenbremse zeichnet sich durch eine ganze Reihe von Vorteilen aus. So ist zu allererst die Erzielung einer höheren Standzeit zu nennen, die vor allem daraus resultiert, dass die erfindungsgemäß ausgebildeten Druckstücke eine wesentlich geringere Wärmeleitfähigkeit aufweisen als die bisher eingesetzten, wodurch eine Minimierung der thermischen Belastung der übrigen Bauteile erreicht wird, insbesondere der, die als temperaturempfindlich anzusehen sind und im Innern des Bremssattels, d.h. im Bremssattelgehäuse platziert sind.

Daneben lässt sich die neue Scheibenbremse sehr kostengünstig herstellen, wobei bevorzugt ein mit Füllstoffen verstärktes duroplastisches Material zum Einsatz kommt, wie es zum Beispiel bereits für Bremskolben bei hydraulisch betätigten Bremsen eingesetzt wird.

Durch einen hohen Füllstoffanteil, nach einem vorteilhaften Gedanken der Erfindung in Form von Fasern, vorzugsweise Glasfasern, wird eine sehr niedrige Wärmeleitfähigkeit des Druckstücks erreicht.

Dabei verfügt dieses Verbundmaterial über eine akzeptable Druckfestigkeit, während nachteilige Materialeigenschaften, wie eine sehr geringe Biege- und Zugfestigkeit sowie eine geringe Bruchdehnung aufgrund des hohen Glasfaseranteils durch die entsprechend der Erfindung vorgesehene Kappe in für den Betrieb unschädlichen Grenzen gehalten werden, d.h., durch die Erfindung ist es überraschend gelungen, trotz der für den gedachten Einsatzzweck an sich ungenügenden Belastbarkeit des Materials die Festigkeit und Dauerhaltbarkeit der Druckstücke auf ein erforderliches Maß anzuheben. Als besonders bemerkenswert ist in diesem Zusammenhang die einfache und damit kostengünstige Realisierung dieser Maßnahmen anzusehen.

Durch die zwischen den einander zugewandten, Druckflächen bildenden Stirnseiten der Stellspindel und des Druckstücks vorgesehene Kappe, die vorzugsweise aus einem Stahlformteil gebildet ist und die mit ihrer Wandung einen Ansatz des Druckstücks umschließt, wird die bislang ungenügende Berstfestigkeit dieses zylindrischen Ansatzes sicher gestellt.

Eine bevorzugte Weiterbildung der Erfindung sieht vor, dass die Kappe, die im Übrigen statt aus Stahl auch aus einem anderen, vergleichbar hochfesten Material bestehen kann, mit einem sich radial nach außen erstreckenden umlaufenden Kragen ausgebildet ist, der sich an einer Schulter des Druckstücks, die einen gebildeten Druckteller begrenzt, abstützt. Hierdurch wird eine vergrößerte Andruckfläche erreicht, da die von der Stellspindel übertragene Druckkraft auf eine größere Fläche verteilt wird, so dass die Flächenpressung insgesamt, vor allem die auf den Ansatz wirkende in deutlichem Umfang reduziert wird.

Die Kappe kann als Formteil aufgesetzt, aufgepresst oder aufgeklebt sein oder als eingepresstes oder eingespritztes Einlegeteil ausgebildet sein.

Zweckmäßig ist die Gestaltung des Druckstückes so, dass ein Abplatzen des sehr spröden Duroplastes im Bereich von Kanten und Randzonen verhindert wird. Hierzu werden diese Bereiche mit möglichst großen Rundungen versehen.

Um eine Entlastung des Drucktellers von bei hohen Belastungen auftretenden Biegebeanspruchungen zu erreichen, können durch eine entsprechende Formgebung des Druckstückbodens, der auch als Tellerboden bezeichnet werden kann und der im Fall einer Bremsung an der Belagträgerplatte anliegt, als Folge einer hohen Kompressibilität auftretende Verformungsunterschiede kompensiert werden.

Dabei wird der Tellerboden so gestaltet, dass bei einem weitgehend kraftlosen Aufsetzen auf die Belagträgerplatte lediglich der mittlere Bereich des Tellerbodens, also der Druckfläche, mit der Belagträgerplatte in Kontakt kommt und zum Rand hin ein zunehmender Spalt entsteht.

Bei anwachsender Druckkraft wird nun der mittlere Bereich des Druckstücks deutlich stärker verpresst als die Randzone des Tellerbodens, so dass sich mit steigernder Belastung der Tellerboden entsprechend an die Belagträgerplatte anlegt und bei maximal wirksamen Kräften eine nahezu vollständige Anlage gegeben ist.

In idealer Weise wird somit erreicht, dass ausschließlich bei den im Prinzip nur selten auftretenden stärkeren Bremsungen die dann sinnvollerweise große Auflagefläche des Druckstücks zum Einsatz kommt.

Damit wird die Biegebeanspruchung des äußeren Randbereiches in der Häufigkeit erheblich reduziert, was sich naturgemäß standzeitverlängernd auf das gesamte Druckstück auswirkt.

Die bei schwächeren Bremsungen wirksame mittige kleinere Kontaktfläche des Druckstücks, die an der Belagträgerplatte anliegt, führt zu einer Minimierung des Wärmeübergangs, was ebenfalls zu einer Reduzierung der thermischen Belastung beiträgt.

Bevorzugt kommt ein Duroplast zum Einsatz, das aus Phenolharz besteht, dem als Füllstoff Kurzglasfasern beigemischt sind. Die Dichte beträgt dabei 2,1 g/cm³, die Druckfestigkeit 350 MPa, die Biegefestigkeit 175 MPa, die Zugfestigkeit 75 MPa, das Biege-E-Modul 24 GPa und das Zug-E-Modul 29 GPa. Gegenüber einem bisher als Druckstück eingesetzten Stahl, beispielsweise 16 MnCr5 mit einer Wärmeleitfähigkeit von ca. 50 W/m K, ist die Wärmeleitfähigkeit des neuen Druckstücks < 1 W/m K.

Allein der Vergleich dieser Werte zeigt sehr eindrucksvoll, welche Verbesserung die Erfindung bezüglich einer Reduzierung der Wärmebelastung bildet.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1 bis 3: jeweils ein Ausführungsbeispiel einer Einzelheit einer erfindungsgemäßen Schreibenbremse in einer geschnittenen Seitenansicht
- Figuren 4 bis 6: verschiedene Ausführungsbeispiele einer Einzelheit nach den Figuren 1 bis 3, jeweils in einer Seitenansicht.

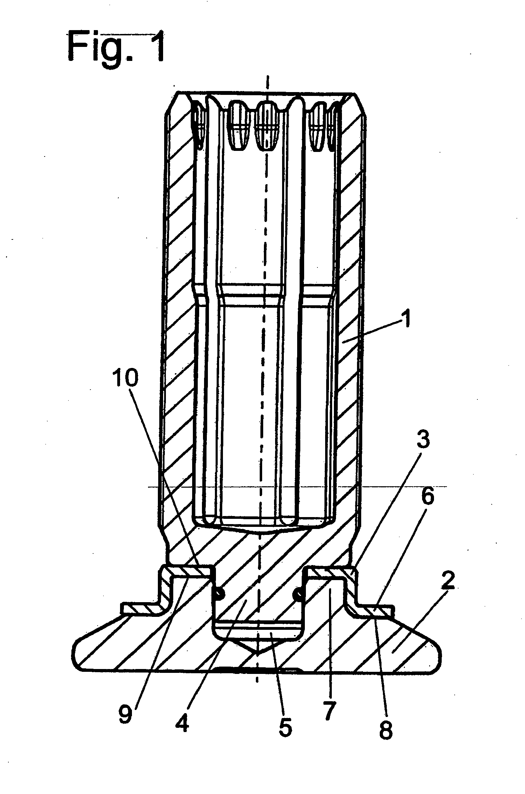

In den Figuren 1 bis 3 ist jeweils eine Stellspindel 1 erkennbar, an der ein Druckstück 2 befestigt ist, das mit seiner der Stellspindel 1 abgewandten Seite mittels der Stellspindel 1 gegen einen nicht dargestellten Bremsbelag im Fall einer Bremsung drückbar ist.

Das zumindest teilweise aus einem Duroplast bestehende Druckstück 2, dem bevorzugt ein Füllstoff in Form von Kurzglasfasern beigemischt ist, trägt eine Kappe 3, an der sich einerseits eine Stirnfläche 10 der Stellspindel 1 und andererseits eine Stirnfläche 9 des Druckstücks 2 abstützen.

Mit ihrer umlaufenden Wandung umschließt die Kappe 3 einen zylindrischen Ansatz 7 des Druckstücks 2 und bildet so eine radiale Abstützung.

Weiter ist ein radial umlaufend, nach außen gerichteter Kragen 6 angeformt, der sich an die axiale Wandung der Kappe 3 anschließt und der an einer Schulter 8 des Druckstücks 2 anliegt.

Die im Funktionsfall von der Stellspindel 1 auf das Druckstück 2 zu übertragenden Druckkräfte werden so auf eine größere Fläche verteilt, nämlich auf die gebildete Lage zwischen den Stirnflächen 9, 10 und den Kragen 6.

Im Übrigen ist das Druckstück 2 auf einen konzentrischen Zapfen 4 der Stellspindel 1 gepresst, wozu im Druckstück 2 ein Sackloch 5 vorgesehen ist, zur Aufnahme des Zapfens 4.

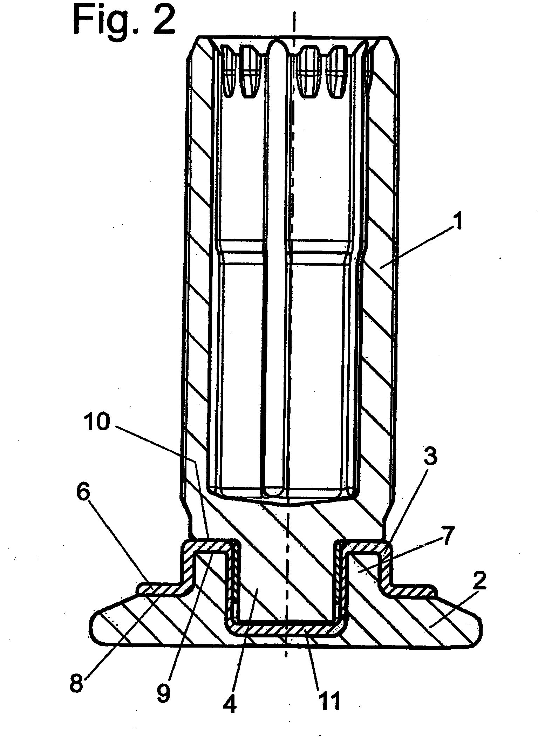

Während bei dem in der Figur 1 gezeigten Beispiel der Zapfen 4 eine Mittenöffnung der Kappe 3 durchtritt, ist diese bei dem in der Figur 2 gezeigten Beispiel geschlossen ausgebildet, wobei der Zapfen 4 der Stellspindel 1, der als Gewinderohr ausgebildet sein kann, in dem Napf 11 gehalten ist.

Die geschlossene Oberfläche der Kappe 3 verhindert, dass beispielsweise bei einer Rissbildung im Druckstück Feuchtigkeit ins Innere des Bremssattels gelangen kann.

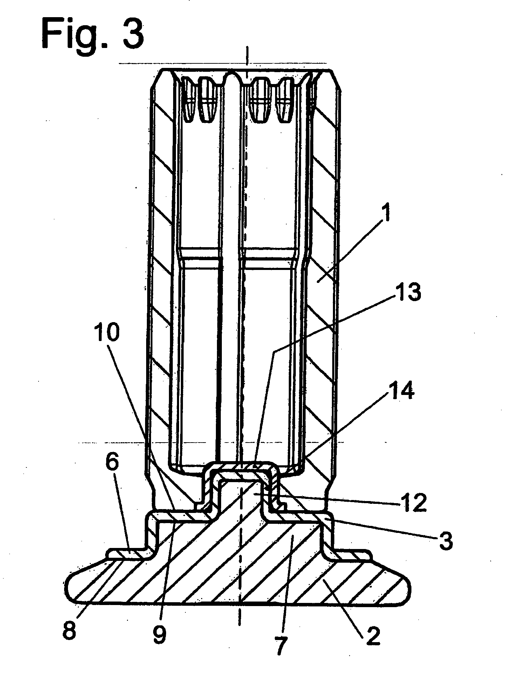

Bei dem in der Figur 3 dargestellten Beispiel ist an das Druckstück auf der der Stellspindel 1 zugewandten Seite, ein Führungsbolzen 12 angeformt, der in einer Haube 14 der Kappe 3 gehalten ist, die wiederum in eine topfartige Aufnahme 13 der Stellspindel 1 eingepresst ist.

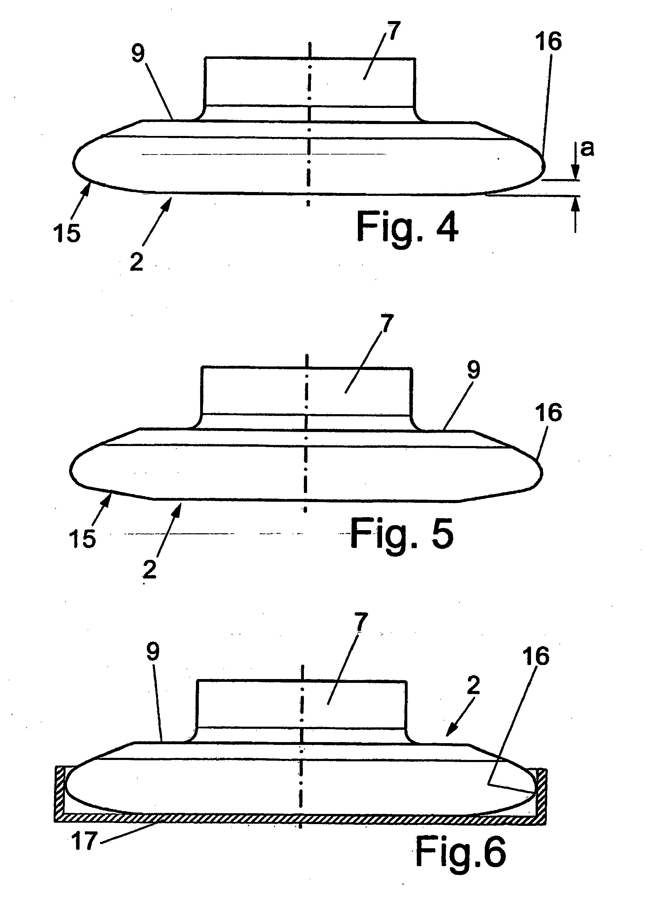

In den Figuren 4 und 5 ist jeweils eine besondere Ausformung des Druckstücks 2 dargestellt.

In der Figur 4 ist zu erkennen, dass sich an einen konzentrischen plan ebenen Mittenbereich ein konvexer Randbereich 15 anschließt, der in eine gerundete Kante 16 übergeht, deren Radius möglichst groß gehalten sein soll, so dass ein Abplatzen des sehr spröden Duroplasts verhindert wird.

Abhängig von den Materialeigenschaften kann der zur Kante 16 hin ansteigende gebildete Spalt a etwa 0,1 mm betragen.

In der Figur 5 ist der Randbereich 15 als Schräge ausgebildet, im Übrigen jedoch in seiner Wirkung vergleichbar mit der konvexen Ausformung nach Figur 4.

Um die entstehende Reibung zwischen dem Bremsbelag, d.h. einer Belagträgerplatte und dem Druckstück 2 zu reduzieren, ist das Druckstück 2 in einem dünnwandigen Deckel 17 gelagert, der das Druckstück 2 an seiner Auflagefläche und im Bereich der umlaufenden Kante 16 umschließt, wobei er im Überdeckungsbereich mit dem Druckstück 2 plan eben ausgebildet ist und eine Andruckfläche an der Belagträgerplatte bildet. Dieser Deckel 17 ist bevorzugt aus Stahlblech gefertigt, insbesondere aus einem nicht rostenden Stahl.

### Bezugszeichenliste

- 1: Stellspindel
- 2: Druckstück
- 3: Kappe
- 4: Zapfen
- 5: Sackloch
- 6: Kragen
- 7: Ansatz
- 8: Schulter
- 9: Stirnfläche
- 10: Stirnfläche
- 11: Napf
- 12: Führungsbolzen
- 13: Aufnahme
- 14: Haube
- 15: Randbereich
- 16: Kante
- 17: Deckel

## Patentansprüche

1. Scheibenbremse, insbesondere für ein Nutzfahrzeug, mit einem eine Bremsscheibe übergreifenden Bremssattel und einer Zuspanneinrichtung, mit der über mindestens eine im Bremssattel geführte Stellspindel (1) in Korrespondenz mit einem Druckstück (2) ein Bremsbelag gegen die Bremsschreibe drückbar ist, wobei das zwischen der Stellspindel (1) und dem Bremsbelag angeordnete Druckstück (2) auf den der Stellspindel (1) und dem Bremsbelag zugewandten Seiten jeweils eine Druckfläche aufweist und zwischen den einander zugewandten, Druckflächen bildenden Stirnflächen (9, 10) der Stellspindel (1) und des Druckstücks (2) eine Kappe (3) angeordnet ist, die mit ihrer Wandung einen Ansatz (7) des Druckstücks (2) umschließt, **dadurch gekennzeichnet, dass** das Druckstück (2) zumindest teilweise aus einem Duroplast besteht.

2. Scheibenbremse nach Anspruch 1, **dadurch gekennzeichnet, dass** die Kappe (3) aus Stahl, vorzugsweise einem nicht rostenden Stahl besteht.

3. Scheibenbremse nach Anspruch 1 oder 2, **dadurch gekennzeichnet, dass** das Druckstück (2) einen faserförmigen Füllstoff beinhaltet.

4. Scheibenbremse nach einem der vorhergehenden Ansprüche, **dadurch gekennzeichnet, dass** der Füllstoff aus Glasfasern besteht.

5. Scheibenbremse nach einem der vorhergehenden Ansprüche, **dadurch gekennzeichnet, dass** der Füllstoff aus Kurzglasfasern besteht.

6. Scheibenbremse nach einem der vorhergehenden Ansprüche, **dadurch gekennzeichnet, dass** die Kappe (3) einen radial nach außen gerichteten, umlaufenden Kragen (6) aufweist, der an einer Schulter (8) des Druckstücks (2) anliegt.

7. Scheibenbremse nach einem der vorhergehenden Ansprüche, **dadurch gekennzeichnet, dass** die Stellspindel (1) auf ihrer dem Druckstück (2) zugewandten Seite einen konzentrischen Zapfen (4) aufweist, der in ein konzentrisches Sackloch (5) des Druckstücks (2) eingepresst ist.

8. Scheibenbremse nach einem der vorhergehenden Ansprüche, **dadurch gekennzeichnet, dass** die Kappe (3) auf das Druckstück (2) aufgepresst oder angeklebt oder als Einlegeteil umspritzt ist.

9. Scheibenbremse nach einem der vorhergehenden Ansprüche, **dadurch gekennzeichnet, dass** die Kappe (3) einen eingezogenen Napf (11) aufweist, in den der Zapfen (4) eingeschraubt oder eingepresst ist.

10. Scheibenbremse nach einem der vorhergehenden Ansprüche, **dadurch gekennzeichnet, dass** das Druckstück (2) einen in Richtung der Stellspindel (1) vorstehenden Führungsbolzen (12) aufweist, der in einer Haube (14) der Kappe (3) einliegt.

11. Scheibenbremse nach einem der vorhergehenden Ansprüche, **dadurch gekennzeichnet, dass** der Führungsbolzen (12) mit der Haube (14) in einer topfartigen Aufnahme (13) der Stellspindel (1) gehalten ist.

12. Scheibenbremse nach einem der vorhergehenden Ansprüche, **dadurch gekennzeichnet, dass** das Druckstück (2) auf seiner der Stellspindel (1) abgewandten Seite eine plan ebene, konzentrische Auflagefläche besitzt, an die sich ein umlaufender, ansteigender Randbereich (15) anschließt.

13. Scheibenbremse nach einem der vorhergehenden Ansprüche, **dadurch gekennzeichnet, dass** der Randbereich (15) konvex ausgebildet ist.

14. Scheibenbremse nach einem der vorhergehenden Ansprüche, **dadurch gekennzeichnet, dass** der Randbereich (15) als Schräge ausgebildet ist.

15. Scheibenbremse nach einem der vorhergehenden Ansprüche, **dadurch gekennzeichnet, dass** der Randbereich (15) in eine gerundete Kante (16) übergeht.

16. Scheibenbremse nach einem der vorhergehenden Ansprüche, **dadurch gekennzeichnet, dass** die der Stellspindel (1) abgewandte Seite des Druckstücks (2) von einem Deckel (17) überdeckt ist.

17. Scheibenbremse nach einem der vorhergehenden Ansprüche, **dadurch gekennzeichnet, dass** der Deckel (17) die Auflagefläche, den Randbereich (15) und die Kante (16) überdeckt.

18. Scheibenbremse nach einem der vorhergehenden Ansprüche, **dadurch gekennzeichnet, dass** der Deckel (17) eine plan ebene, die Unterseite des Druckstücks (2) überdeckende Anlagefläche aufweist.

19. Scheibenbremse nach einem der vorhergehenden Ansprüche, **dadurch gekennzeichnet, dass** der Deckel (17) aus Stahl, vorzugsweise einem nicht rostenden Stahl besteht.

## Claims

1. Disc brake, in particular for a commercial vehicle, comprising a brake calliper extending across a brake disc and a brake application device with which a brake pad can be pressed against the brake disc via at least one actuating spindle (1) guided in the brake calliper, in correspondence with a thrust piece (2), wherein the thrust piece (2) located between the actuating spindle (1) and the brake pad has a thrust face each on the sides facing the actuating spindle (1) and the brake pad, and wherein a cap (3) is interposed between the end faces (9, 10), oriented towards one another and forming thrust faces, of the actuating spindle (1) and of the thrust piece (2), the wall of which cap (3) surrounds a projection (7) of the thrust piece (2), **characterised in that** the thrust piece (2) consists at least partially of a thermosetting plastic material.

2. Disc brake according to claim 1, **characterised in that** the cap (3) consists of steel, preferably of a stainless steel.

3. Disc brake according to claim 1 or 2, **characterised in that** the thrust piece (2) contains a filling material in the form of fibres.

4. Disc brake according to any of the preceding claims, **characterised in that** the filling material consists of glass fibres.

5. Disc brake according to any of the preceding claims, **characterised in that** the filling material consists of short glass fibres.

6. Disc brake according to any of the preceding claims, **characterised in that** the cap (3) has a circumferential collar (6) oriented radially outwards, which rests against a shoulder (8) of the thrust piece (2).

7. Disc brake according to any of the preceding claims, **characterised in that** the actuating spindle (1) has on its side oriented towards the thrust piece (2) a concentric spigot (4) which is pressed into a concentric blind hole (5) of the thrust piece (2).

8. Disc brake according to any of the preceding claims, **characterised in that** the cap (3) is pressed onto the thrust piece (2) or is bonded thereto or is an insert around which material is injection-moulded.

9. Disc brake according to any of the preceding claims, **characterised in that** the cap (3) has an inserted cup (11) into which the spigot (4) is screwed or pressed.

10. Disc brake according to any of the preceding claims, **characterised in that** the thrust piece (2) has a guide pin (12) which projects in the direction of the actuating spindle (1) and is located in a hood (14) of the cap (3).

11. Disc brake according to any of the preceding claims, **characterised in that** the guide pin (12) is retained with the hood (14) in a pot-shaped receptacle (13) of the actuating spindle (1).

12. Disc brake according to any of the preceding claims, **characterised in that** the thrust piece (2) has on its side oriented away from the actuating spindle (1) a flat concentric contact surface which is adjoined by a circumferential, rising edge region (15).

13. Disc brake according to any of the preceding claims, **characterised in that** the edge region (15) has a convex configuration.

14. Disc brake according to any of the preceding claims, **characterised in that** the edge region (15) is in the form of a chamfer.

15. Disc brake according to any of the preceding claims, **characterised in that** the edge region (15) merges into a rounded edge (16).

16. Disc brake according to any of the preceding claims, **characterised in that** the the side of the thrust piece (2) oriented away from the actuating spindle (1) is covered by a cover (17).

17. Disc brake according to any of the preceding claims, **characterised in that** the cover (17) covers the contact surface, the edge region (15) and the edge (16).

18. Disc brake according to any of the preceding claims, **characterised in that** the cover (17) has a flat contact surface covering the underside of the thrust piece (2).

19. Disc brake according to any of the preceding claims, **characterised in that** the the cover (17) consists of steel, preferably of a stainless steel.

## Revendications

1. Frein à disque, notamment pour un véhicule utilitaire, comprenant un étrier de frein recouvrant un disque de frein et un dispositif de serrage, par lequel une garniture de frein peut, par au moins une broche (1) de réglage guidée dans l'étrier de frein en correspondance avec une pièce (2) d'application d'une pression, être poussée sur le disque de frein, dans lequel la pièce (2) d'application d'une pression, disposée entre la broche (1) de réglage et la garniture de frein, a, sur les côtés tournés vers la broche (1) de réglage et la garniture de frein, une surface d'application d'une pression et, entre les surfaces (9, 10) frontales, tournées l'une vers l'autre et formant des surfaces d'application d'une pression, de la broche (1) de réglage et de la pièce (2) d'application d'une pression, est disposée une coiffe (3), qui entoure, par sa paroi, une saillie (7) de la pièce (2) d'application d'une pression, **caractérisé en ce que** la pièce (2) d'application d'une pression est constituée, au moins en partie, en une matière thermodurcissable.

2. Frein à disque suivant la revendication 1, **caractérisé en ce que** la coiffe (3) est en acier, de préférence en un acier inoxydable.

3. Frein à disque suivant la revendication 1 ou 2, **caractérisé en ce que** la pièce (2) d'application d'une pression contient une charge en forme de fibre.

4. Frein à disque suivant l'une des revendications précédentes, **caractérisé en ce que** la charge est en fibres de verre.

5. Frein à disque suivant l'une des revendications précédentes, **caractérisé en ce que** la charge est en fibres de verre courtes.

6. Frein à disque suivant l'une des revendications précédentes, **caractérisé en ce que** la coiffe (3) a un collet (6) qui est dirigé radialement vers l'extérieur, qui fait le tour et qui s'appuie sur un épaulement (8) de la pièce (2) d'application d'une pression.

7. Frein à disque suivant l'une des revendications précédentes, **caractérisé en ce que** la broche (1) de réglage a, du côté tourné vers la pièce (2) d'application d'une pression, un tourillon (4) concentrique, qui est enfoncé dans un trou (5) borgne concentrique de la pièce (2 ) d'application d'une pression.

8. Frein à disque suivant l'une des revendications précédentes, **caractérisé en ce que** la coiffe (3) est pressée sur la pièce (2) d'application d'une pression ou y est collée ou y est encastrée par injection.

9. Frein à disque suivant l'une des revendications précédentes, **caractérisé en ce que** la coiffe (3) a un godet (11) rentré, dans lequel le tourillon (4) est vissé ou est enfoncé.

10. Frein à disque suivant l'une des revendications précédentes, **caractérisé en ce que** la pièce (2) d'application d'une pression a un tenon (12) de guidage en saillie dans la direction de la broche (1) de réglage et entrant dans une calotte (14) de la coiffe (3).

11. Frein à disque suivant l'une des revendications précédentes, **caractérisé en ce que** le tenon (12) de guidage est maintenu avec la calotte (14) dans un logement (13) de type en pot de la broche (1) de guidage.

12. Frein à disque suivant l'une des revendications précédentes, **caractérisé en ce que** la pièce (2) d'application d'une pression a, du côté éloigné de la broche (1) de réglage, une surface de support concentrique, plane suivant un plan, et à laquelle se raccorde une partie (15) de bord faisant le tour et montante.

13. Frein à disque suivant l'une des revendications précédentes, **caractérisé en ce que** la partie (15) de bord est convexe.

14. Frein à disque suivant l'une des revendications précédentes, **caractérisé en ce que** la partie (15) de bord est constituée sous la forme d'un biseau.

15. Frein à disque suivant l'une des revendications précédentes, **caractérisé en ce que** la partie (15) de bord se transforme en une arête (16) arrondie.

16. Frein à disque suivant l'une des revendications précédentes, **caractérisé en ce que** le côté, éloigné de la broche (1) de réglage, de la pièce (2) d'application d'une pression, est recouvert d'un couvercle (17).

17. Frein à disque suivant l'une des revendications précédentes, **caractérisé en ce que** le couvercle (17) recouvre la surface de support, la partie (15) de bord et l'arête (16).

18. Frein à disque suivant l'une des revendications précédentes, **caractérisé en ce que** le couvercle (17) a une surface de contact, plane suivant un plan et recouvrant le côté inférieur de la pièce (2) d'application d'une pression.

19. Frein à disque suivant l'une des revendications précédentes, **caractérisé en ce que** le couvercle (17) est en acier, de préférence en un acier inoxydable.
